# EUROPÄISCHE PATENTSCHRIFT

(11) **EP 2 892 943 B1**
(45) Veröffentlichungstag und Bekanntmachung des Hinweises auf die Patenterteilung: **22.06.2016**
(21) Anmeldenummer: 13756481.1
(22) Anmeldetag: 03.09.2013
(51) Int. Cl.: C08G 75/23, C08F 2/01

(54) **VERFAHREN ZUR HERSTELLUNG VON AROMATISCHEN POLYETHERSULFONEN**
PROCESS FOR PREPARING AROMATIC POLYETHERSULPHONES
PROCÉDÉ DE PRÉPARATION DE POLYÉTHERSUFONES AROMATIQUES

(30) Priorität: 03.09.2012 EP 12182763
(43) Veröffentlichungstag der Anmeldung: 15.07.2015
(73) Patentinhaber: BASF SE, 67056 Ludwigshafen am Rhein (DE)
(72) Erfinder: EL-TOUFAILI, Faissal-Ali, 67063 Ludwigshafen (DE); STAMMER, Achim, 67251 Freinsheim (DE); GRAMLICH, Simon, 69493 Hirschberg (DE); ULZHÖFER, Angela, 67065 Ludwigshafen (DE)
(74) Vertreter: BASF IP Association
(86) Internationale Anmeldenummer: PCT/EP2013/068187
(87) Internationale Veröffentlichungsnummer: WO 2014/033321

(56) Entgegenhaltungen:
- WO-A1-00/18824
- DE-A1- 2 749 645
- DE-A1- 10 244 628
- JP-A- 2004 263 154
- US-A- 4 156 068

## Beschreibung

Die Erfindung betrifft ein Verfahren zur Herstellung von aromatischen Polyethersulfonen und die im Verfahren erhältlichen Polyethersulfone.

Aromatische Polyethersulfone werden üblicherweise durch Kondensation einer Dichlordiphenylsulfon-Komponente mit einer Bisphenol-Komponente als Monomeren in Gegenwart von Alkalicarbonaten hergestellt. Üblicherweise erfolgt die Polykondensation in einem Lösungsmittel, wie N-Methylpyrrolidon (NMP). Ein derartiges Verfahren hat den Nachteil, dass ein toxisches Lösungsmittel gehandhabt werden muss, das nach der Umsetzung vom Produkt abgetrennt, gegebenenfalls aufgereinigt und in die Umsetzung zurückgeführt werden muss.

Die DE-A-27 49 645 betrifft ein Verfahren zur Herstellung von Polyethern, bei dem im Wesentlichen äquivalente Mengen eines Bisphenols und einer Dihalogenbenzolverbindung in Abwesenheit von Lösungs- oder Verdünnungsmitteln und in Gegenwart von wasserfreiem Alkalicarbonat kondensiert werden. Als Vorrichtungen werden die für Polymere üblichen Kneter oder Extruder, die eine Vorrichtung zur Entfernung flüchtiger Bestandteile aufweisen, genannt. In den Beispielen ist die verwendete Vorrichtung nicht näher charakterisiert.

WO 00/18824 A1 betrifft neue Poly(biphenylethersulfone). Die Druckschrift betrifft insbesondere ein neues Poly(biphenylethersulfon) mit einer verbesserten Polydispersität, verbesserten Schmelzflusseigenschaften für ein gegebenes Zahlenmittel des Molekulargewichts und mit niedrigen Gehalten an niedermolekularen oligomeren Komponenten.

In JP 2004 263154 A wird ein Biphenylenether in aprotischen Lösungsmitteln hergestellt.

In US 4,156,068 A werden hochmolekulare Polyethersulfone hergestellt, indem ein 3,3',5,5'-Tetraalkyl-4,4'-dihydroxybiphenyl mit einem 4,4'-Dihalogendiphenylsulfon in Gegenwart eines Alkalimetallcarbonats oder Bicarbonats und eines dipolaren aprotischen Lösungsmittels reagiert.

DE 102 44 628 A1 beschreibt ein Verfahren zur Herstellung aromatischer Polyether mit hohen Molekulargewichten. Dabei sind die aromatischen Polyether erhältlich durch Polymerisation eines Biphenols und eines Dihalogendiphenylsulfons in Diphenylsulfon in Gegenwart eines Alkalimetallcarbonats und/oder eines Alkalimetallhydrogencarbonats.

Aufgabe der vorliegenden Erfindung ist die Bereitstellung eines Verfahrens zur Herstellung von aromatischen Polyethersulfonen durch Umsetzung einer Dichlordiphenylsulfon-Komponente mit einer Bisphenol-Komponente als Monomeren in Gegenwart von Alkalicarbonat in der Schmelze in Abwesenheit von Lösungs- oder Verdünnungsmitteln, wobei hohe Molekulargewichte zugänglich sein sollen und sich die aromatischen Polyethersulfone möglichst wenig verfärben sollen.

Die Aufgabe wird erfindungsgemäß gelöst durch ein Verfahren zur Herstellung von aromatischen Polyethersulfonen durch Umsetzung einer Dichlordiphenylsulfon-Komponente mit einer Bisphenol-Komponente als Monomeren in Gegenwart von Alkalicarbonat in der Schmelze in Abwesenheit von Lösungs- oder Verdünnungsmitteln, wobei die Umsetzung in einem Mischkneter durchgeführt wird, der mit einer Scherrate im Bereich von 5 bis 500 s⁻¹ betrieben wird, wobei der Füllgrad des Mischkneters im Bereich von 0,2 bis 0,8 liegt.

Der Füllgrad des Mischkneters liegt erfindungsgemäß bevorzugt im Bereich von 0,22 bis 0,7, insbesondere 0,3 bis 0,7, speziell 0,35 bis 0,64.

Der Begriff "Füllgrad" gibt an, welcher Anteil des freien Volumens im Kneter, der mit Monomeren gefüllt werden kann und eine Durchmischung erlaubt, von den Ausgangsmonomeren ausgefüllt wird. Ein Füllgrad im Bereich von 0,2 bis 0,8 gibt damit an, dass 20 bis 80 % des zur Befüllung mit Monomeren und deren Durchmischung zur Verfügung stehenden freien Volumens im Verfahren zur Befüllung mit Monomeren und Alkalicarbonat genutzt werden.

Die Scherrate ist definiert als der Gradient der Geschwindigkeit in dem Knetgut im Spalt zwischen dem rotierenden Knetbarren und der Wandung, s= 2 n*π*dᵣₒₜ/(dᵢ-dᵣₒₜ) mit der Drehzahl n[s⁻¹], dem Rotordurchmesser dᵣₒₜ [m] und dem Innendurchmesser des Apparats di [m]. Sie beschreibt das Ausmaß der Scherung durch die Mischelemente im Kneter, typischerweise die Scherung zwischen Rotor und Außenwand, bzw. zwischen Barren und Stator.

Die Scherrate liegt im Bereich von 5 bis 500 s⁻¹, vorzugsweise 10 bis 250 s⁻¹, insbesondere 20 bis 100 s⁻¹.

Wird ein s-Wert von s/2 verwendet, so liegt die Scherrate im Bereich von 5 bis 500 s⁻¹, vorzugsweise 25 bis 100 s⁻¹, insbesondere 35 bis 70 s¹.

Als Mischkneter können alle bekannten geeigneten Mischkneter eingesetzt werden, die ein Aufheizen bis über den Schmelzpunkt der Monomere erlauben und das Ausschleusen von gasförmigen Kondensationsprodukten ermöglichen.

Geeignete Mischkneter weisen in der Regel eine oder vorzugsweise mindestens zwei achsparallele rotierende Wellen auf, von denen die Hauptwelle Scheibenflächen aufweisen kann mit an ihrem Umfang angeordneten Knetbarren. Geeignete Mischkneter sind beispielsweise in DE-A-41 18 884 und DE-A-199 40 521 beschrieben.

Vorzugsweise weist der Mischkneter einen Rotor auf, der mit einer Drehzahl im Bereich von 5 bis 50 Umdrehungen pro Minute, besonders bevorzugt 7,5 bis 40 Umdrehungen pro Minute und insbesondere 10 bis 30 Umdrehungen pro Minute betrieben wird.

Der erfindungsgemäß eingesetzte Mischkneter weist den Vorteil auf, dass die Verweilzeit wesentlich länger sein kann als im Extruder. Zudem ist die Entgasung wesentlich einfacher und weitgehender möglich, so dass die gasförmigen Polykondensationsprodukte in einfacher Weise ausgetragen werden können. Zudem lässt sich die erfindungsgemäße Scherrate einfacher im Mischkneter einstellen.

Das erfindungsgemäße Verfahren kann als Batchverfahren oder als kontinuierliches Verfahren durchgeführt werden. Vorzugsweise wird das Verfahren kontinuierlich durchgeführt, wobei bevorzugt kontinuierlich betriebene zweiachsige Mischkneter eingesetzt werden, wie sie beispielsweise als LIST TCF oder BUSS SMS erhältlich sind.

Die Kombination aus Mischkneter, Füllgrad und Scherrate erlaubt es erfindungsgemäß, hohe Molekulargewichte der aromatischen Polyethersulfone zu erreichen, ohne dass das Produkt durch Verfärbung leidet.

Im erfindungsgemäßen Verfahren können eine Vielzahl unterschiedlicher aromatischer Polyethersulfone hergestellt werden, in dem eine oder mehrere Dichlordiphenylsulfon-Komponenten mit einer oder mehreren Bisphenol-Komponenten als Monomeren umgesetzt werden.

Die aromatischen Gruppen der Polyethersulfone, auch als Arylengruppen bezeichnet, können gleich oder verschieden sein und unabhängig voneinander einen aromatischen Rest mit 6 bis 18C-Atomen bedeuten.

Beispiele geeigneter Arylengruppen sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano-oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. Des Weiteren sind Substituenten bevorzugt, die durch Reaktion der Polyarylenethersulfone mit einer reaktiven Verbindung, die neben einer C-C-Doppel- oder Dreifachbindung eine bzw. mehrere Carbonyl-, Carbonsäure-, Carboxylat-, Säureanhydrid, Säureamid-, Säureimid-, Carbonsäureester-, Amino-, Hydroxyl-, Epoxi-, Oxazolin-, Urethan-, Harnstoff-, Lactam- oder Halogenbenzylgruppen enthält, erhalten werden. Die Arylengruppen der Polyarylenether können neben -SO₂-, z. B. über-O-, -S-, - SO-, -CO-, -N=N-, -COO-, einen Alkylenrest, der gewünschtenfalls substituiert sein kann, oder eine chemische Bindung miteinander verknüpft sein.

Erfindungsgemäß brauchbare Polyarylenethersulfone können aus wiederkehrenden Einheiten der Formel I aufgebaut sein 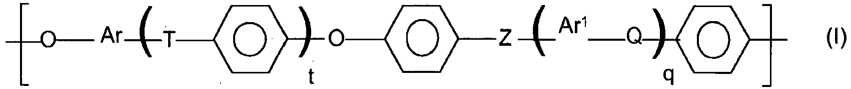 worin
t und q unabhängig voneinander für 0, 1, 2 oder 3 stehen,
Q, T, und Z unabhängig voneinander jeweils eine chemische Bindung oder eine Gruppe, ausgewählt unter -O-, -S-, -SO₂- S=O, C=O, -N=N-, -RₐC=CR^{b}- und -CR^{c}R^{d}-, bedeuten, wobei
R^{a} und R^{b} unabhängig voneinander jeweils für ein Wasserstoffatom oder eine C₁-C₁₂-Alkylgruppe stehen und
R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei
R^{c} und R^{d} gegebenenfalls unabhängig voneinander mit Fluor- und/oder Chloratomen substituiert sind oder gegebenenfalls zusammen mit dem C-Atom, an das sie gebunden sind, eine C₃-C₁₂-Cycloalkylgruppe bilden, die gegebenenfalls mit einer oder mehreren C₁-C₆-Alkylgruppen substituiert ist, mit der Maßgabe, dass mindestens eine der Gruppen T, Q und Z für -SO₂- steht und, wenn t und q für 0 stehen, Z für -SO₂- steht,
Ar und Ar¹ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind.

Vorzugsweise weisen die aromatischen Polyethersulfone mindestens eine der folgenden Struktureinheiten auf:

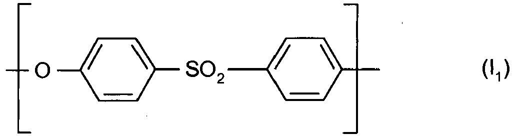

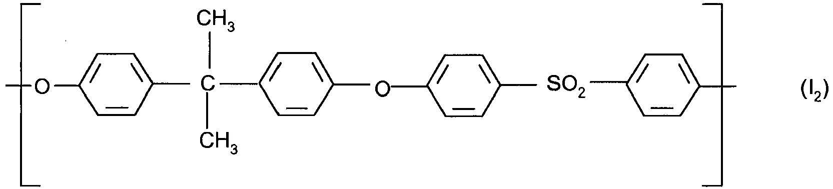

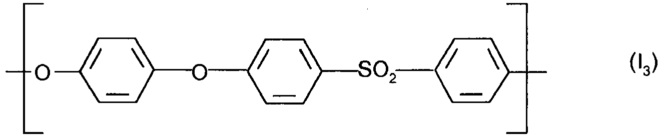

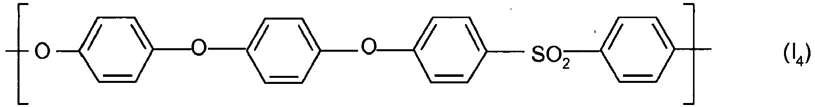

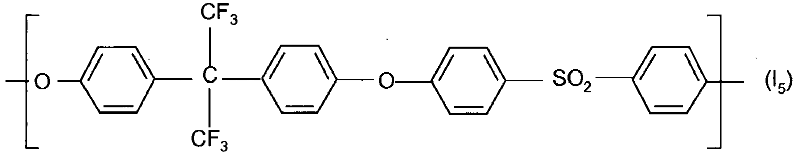

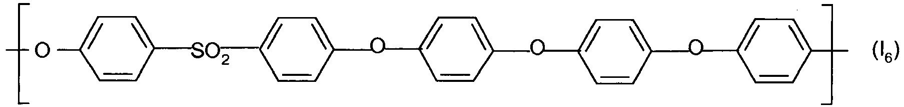

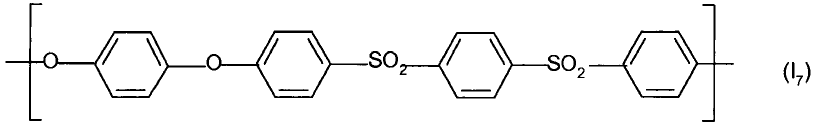

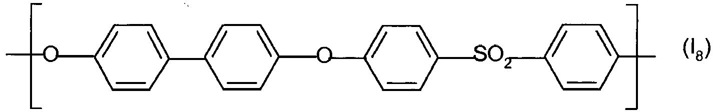

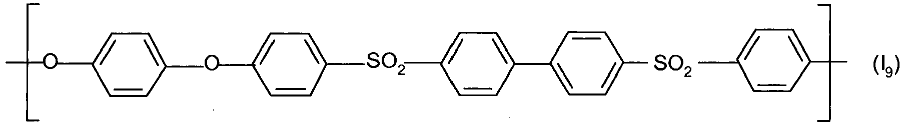

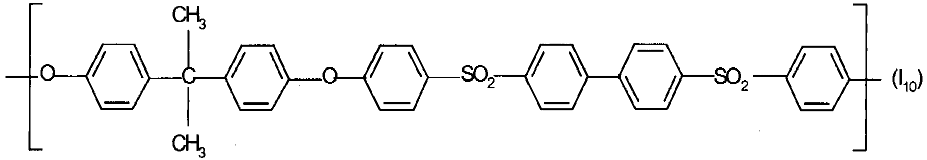

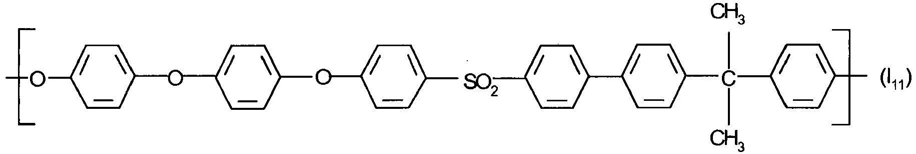

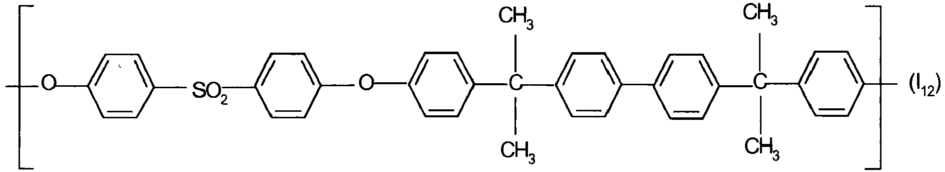

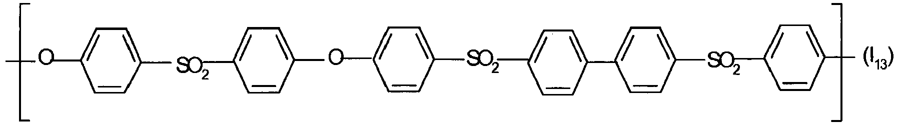

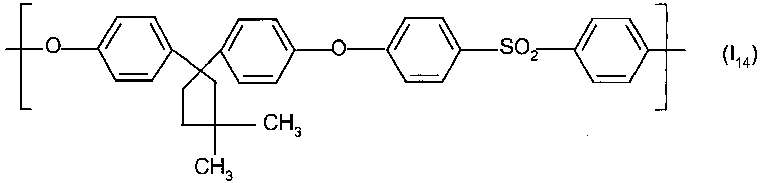

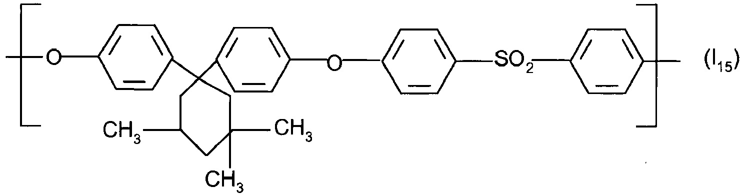

Die als Monomere eingesetzten Dichlordiphenylsulfon-Komponenten und Bisphenol-Komponenten leiten sich dabei von diesen Strukturen ab. Beispielsweise werden zur Herstellung von Polyethersulfonen Dichlordiphenylsulfon und Dihydroxydiphenylsulfon eingesetzt. Derartige Produkte sind beispielsweise unter der Bezeichnung Ultrason^{®} E von der BASF SE erhältlich.

Die Umsetzung von Dichlordiphenylsulfon und 4,4'-Biphenol führt zu Polyphenylensulfon, das von der BASF SE als Ultrason^{®} P erhältlich ist.

Weitere geeignete Monomere sind beispielsweise in DE-A-27 49 645, WO 01/83618 und WO 2010/146052 beschrieben.

Bei der Umsetzung können äquimolare Mengen an Dichlordiphenylsulfon-Komponente und Bisphenol-Komponente eingesetzt werden, oder eine der Komponenten, typischerweise die flüchtigere, kann im Überschuss eingesetzt werden.

Rüstet man den Mischkneter mit einem Rückflusskondensator zur Kondensation verdampfender Monomere aus und führt die kondensierten Monomere in den Mischkneter zurück, so kann mit äquimolaren Mengen beider Monomerkomponenten gearbeitet werden, oder mit geringfügigen Abweichungen hiervon.

Das erfindungsgemäße Verfahren kann bei beliebigen geeigneten Temperaturen durchgeführt werden, sofern die Monomere in der Schmelze vorliegen. Vorzugsweise wird die Umsetzung bei einer Temperatur im Bereich von 250 bis 350 °C durchgeführt.

Im Mischkneter erfolgt die Umsetzung vorzugsweise drucklos, wobei bei der Polykondensation entstehende niedermolekulare Kondensationsprodukte gasförmig ausgetragen werden.

Bei der Umsetzung kann das Alkalicarbonat, das vorzugsweise Kaliumcarbonat ist, als separate Komponente in den Mischkneter eingetragen werden. Es kann jedoch auch mit mindestens einem der Monomere vorgemischt eingesetzt werden. Bei der Kondensation von Bisphenolen mit Dihalogenbenzolverbindungen können zunächst Bisphenol und Alkalicarbonat umgesetzt werden, wobei das Produkt sodann im Mischkneter mit der Dihalogenbenzolverbindung polykondensiert wird. Auch das Einmischen in die Dihalogenbenzolverbindung ist möglich.

In einem kontinuierlich betriebenen Mischkneter können unterschiedliche Zuführungssysteme für die Monomere und Alkalicarbonat eingesetzt werden. Es kann eine Flüssigdosierung verwendet werden, wobei geschmolzene Monomere dosiert werden. Vorzugsweise wird, wie beschrieben, das Alkalicarbonat in mindestens einer der Monomerkomponenten vordispergiert, vorzugsweise im halogenhaltigen Monomer aufgrund seiner Reaktivität mit den Phenolgruppen und der Bildung von Salzen.

Die Zudosierung kann auch in fester Form erfolgen durch gravimetrische Dosierung oder durch eine seitliche Eintragsschnecke. Beim Eintrag durch die Haube des Mischkneters muss sichergestellt werden, dass es zu keiner Verstopfung durch Feststoffe kommt. Ein Minimaldurchmesser der Haube von 150 mm ist vorteilhaft, wie auch ein kurzer Schüttweg des festen Pulvers senkrecht zu den Knetbarren. Die Monomere können zudem granuliert werden, um ihr Fließverhalten anzupassen. Bei Verwendung einer Seiteneintragsschnecke müssen die Monomere und Alkalicarbonat in Pulverform in die Seiteneintragsschnecke eingebracht und durch sie in den Mischkneter eingetragen werden.

Der Füllgrad im Mischkneter kann gesteuert werden durch den Betrieb einer Austragsschnecke, die entsprechend dem Eintrag in den Mischkneter Produkt entnimmt.

Die Umsetzungszeit im Mischkneter kann in Abhängigkeit vom gewünschten Molekulargewicht des aromatischen Polyethersulfons frei gewählt werden. Bevorzugt beträgt die Umsetzungszeit im Mischkneter 1 bis 3,5 Stunden, besonders bevorzugt 1,5 bis 3 Stunden.

Wird ohne Rückflusskondensator gearbeitet, so sollte typischerweise die Einsatzmenge an Dichlordiphenylsulfon um etwa 4 bis 6 mol.-% erhöht werden, da diese Verbindung aufgrund ihres Dampfdrucks von etwa 100 mbar bei einer Temperatur von 300 °C leichter verdampft als die Dihydroxydiphenylsulfon-Komponente.

Die Erfindung betrifft auch nach dem vorstehend beschriebenen Verfahren erhältliche aromatische Polyethersulfone. Derartige aromatische Polyethersulfone weisen vorzugsweise ein Zahlenmittel des Molekulargewichts von oberhalb 10.000 auf, wobei das Zahlenmittel des Molekulargewichts vorzugsweise im Bereich von 10.000 bis 26.000 liegt. Die Polydispersität beträgt dabei vorzugsweise 2 bis 7,5, besonders bevorzugt 2,4 bis 3,2 für Biphenol-basierte Produkte und besonders bevorzugt 3 bis 7,5 für DHDPS-basierte Produkte.

Die Erfindung wird durch die nachstehenden Beispiele näher erläutert.

### Beispiele

### Allgemeine Arbeitsvorschrift

Die Herstellung von Polyethersulfon (PESU) erfolgt durch Umsetzung von Dichlordiphenylsulfon (DCDPS) mit Dihydroxydiphenylsulfon (DHDPS) in Gegenwart von Kaliumcarbonat als Base. Als Kondensationsnebenprodukte fallen Kaliumchlorid als teilchenförmiges Salz, Wasser und Kohlendioxid an. Aufgrund des Schmelzpunktes von DHDPS von 247 °C wird die Umsetzung typischerweise bei einer Temperatur von etwa 300 °C durchgeführt.

In ähnlicher Weise erfolgt die Umsetzung von Dichlordiphenylsulfon (DCDPS) mit 4,4'-Biphenol (BPhOH) zu Polyphenylensulfon (PPSU). Die Umsetzung erfolgt in einem Mischkneter LIST DTB, einem Einschachtmischkneter mit selbstreinigendem System aus Knetbarren und Gegenhaken. Im Laborversuch betrug das Leervolumen des Mischkneters etwa 770 ml.

Der Mischkneter wird mithilfe eines Thermostaten aufgeheizt, wobei nur ein Erwärmen der Außenwand möglich ist. Die drei Ausgangssubstanzen werden in den Reaktor als feste Pulver eingetragen. Nach Spülen mit Argon wird der Reaktor auf die Reaktionstemperatur aufgeheizt, für die benötigte Reaktionszeit bei dieser Temperatur gehalten und anschließend abgekühlt. Während der Umsetzung bewegt sich der Motor des Mischkneters typischerweise mit einer Drehzahl von etwa 20 Umdrehungen pro Minute. Beim Abkühlen fällt die Temperatur im Reaktor unter die Glastemperatur des Polymers, und der Rotor muss abgestellt werden. Nach dem Abkühlen wurde das Polymer mechanisch entnommen. Der Reaktor wird bei Umgebungsdruck betrieben.

Während der Umsetzung werden die Kondensationsprodukte Wasser und Kohlendioxid abdestilliert und aus dem Reaktor mit einem überliegenden Argonstrom von 10 l/h ausgetragen. Sofern kein Rückflusskühler verwendet wird, wird das Monomer DCDPS teilweise mit ausgetragen aufgrund seines hohen Dampfdrucks. Um hohe Molekulargewichte zu erhalten, muss mit einem Überschuss von etwa 4 mol-% DCDPS gearbeitet werden, sofern kein Rückflusskühler eingesetzt wird.

In allen Versuchen wird das Molverhältnis von Kaliumcarbonat zu DHDPS auf 1,06 eingestellt.

### Beispiel 1

Tabelle 1 zeigt die experimentellen Bedingungen und Ergebnisse für die Herstellung von Polyethersulfon. Die Batchcycluszeit t_{c} ist neben Umsetzungstemperatur, Rotordrehzahl, Monomerenmengen und Molverhältnis angegeben.

Nach der Umsetzung wurde das Produkt mechanisch aus dem Mischkneter ausgetragen, auf eine Teilchengröße von etwa 2 mm vermahlen und zweimal mit Wasser für drei Stunden bei 80 °C ausgewaschen. Hierdurch konnten etwa 80 Gew.-% des als Nebenprodukt gebildeten Kaliumchlorids entfernt werden. Aufgrund des verbleibenden Gehalts an Kaliumchlorid ist die bestimmte Viskositätszahl VN geringer im Vergleich zu einem reinen Polymer. Die Molekulargewichte wurden durch GPC-Verfahren bestimmt.

**Tabelle 1**

| Versuch Nr. | 1 | 2 | 3 | 4 | 5 | 6 | 7 | 8 | V50 | V51 |
|---|---|---|---|---|---|---|---|---|---|---|
| DCDPS (A) [g] | 129,29 | 129,29 | 129,29 | 129,29 | 129,29 | 126,69 | 127,41 | 128,12 | 129,29 | 129,29 |
| DHDPS (B) [g] | 108,32 | 108,32 | 108,32 | 108,32 | 108,32 | 109,32 | 108,87 | 108,42 | 108,32 | 108,32 |
| Molverhältnis A/B | 1,04 | 1,04 | 1,04 | 1,04 | 1,04 | 1,01 | 1,02 | 1,03 | 1,04 | 1,04 |
| Rotation [rpm] | 20 | 20 | 20 | 20 | 20 | 20 | 20 | 20 | 0 | 200 |
| Tᵣ[°C] | 300 | 290 | 280 | 300 | 300 | 300 | 300 | 300 | 300 | 300 |
| t_{c}[hr] | 3 | 3 | 3 | 1,5 | 2,5 | 3 | 3 | 3 | 2,5 | 2,5 |
| VN [ml/g] | 83,9 | 79,6 | 36,6 | 55,1 | 60,8 | 80,8 | 60,5 | 48,2 | 10,1 | 16,1 |
| Mn [g/mol] | 26.400 | 25.400 | 18.000 | 17.800 | 22.300 | 20.450 | 17.900 | 15.900 | 5.673 | 8.390 |
| Mw [g/mol] | 95.600 | 100.000 | 44.100 | 48.600 | 87.200 | 78.760 | 46.600 | 42.500 | 13.560 | 19.736 |
| Mw/Mn | 3,6 | 3,9 | 2,5 | 2,7 | 3,9 | 3,9 | 2,6 | 2,7 | 2,4 | 2,3 |

Der Füllgrad des Mischkneters betrug in diesen Beispielen 0,22. Die Rotationsgeschwindigkeit von 20 Umdrehungen pro Minute entspricht einer Scherrate von 100 s⁻¹.

Aus den Ergebnissen der Tabelle 1 geht hervor, dass mit zunehmender Temperatur die Viskositätszahl ansteigt, ebenso mit zunehmender Verweilzeit. Je stärker das Molverhältnis von der Stöchiometrie abweicht, umso geringer ist die Viskositätszahl.

Die Umdrehungsgeschwindigkeit des Mischers wurde in den Vergleichsversuchen V50 und V51 variiert, wobei sowohl ein Stillstand des Rotors wie auch eine hohe Rotationsgeschwindigkeit zu einer Senkung des Molekulargewichts führten. Ohne hinreichende Rotation fehlt die Bildung neuer Grenzflächen zwischen Gasphase und Schmelze, so dass die Kondensationsprodukte Wasser und Kohlendioxid nicht hinreichend abgeführt werden können. Bei einer zu hohen Rotationsgeschwindigkeit war die Scherbelastung der Schmelze um den Faktor 10 angehoben. Die Farbe des Produktes war wesentlich dunkler im Vergleich zum Beispiel 5. Zudem trat eine Bildung von Gelteilchen auf.

### Beispiel 2

In einem weiteren Versuch wurde der Füllgrad des Mischkneters verändert. Da das Molverhältnis von Kaliumcarbonat bezüglich DHDPS vermindert wurde, wurde auch eine etwas verringerte VN beobachtet. Die Ergebnisse sind in der nachstehenden Tabelle 2 dargestellt.

**Tabelle 2**

| Versuch Nr. | 9 | 10 | 11 | V110 | V111 |
|---|---|---|---|---|---|
| DCDPS (A) [g] | 127,41 | 254,81 | 212,35 | 467,16 | 24,63 |
| DHDPS (B) [g] | 108,87 | 217,73 | 181,44 | 399,18 | 21,05 |
| K2CO3 (C) [g] | 63,73 | 127,45 | 106,21 | 233,66 | 12,32 |
| Molverhältnis A/B | 1,02 | 1,02 | 1,02 | 1,02 | 1,02 |
| Molverhältnis C/B | 1,06 | 1,06 | 1,06 | 1,06 | 1,06 |
| Füllgrad | 0,22 | 0,44 | 0,38 | 0,95 | 0,05 |
| Rührergeschwindigkeit [1/min] | 20 | 20 | 20 | 20 | 20 |
| Tr [°C] | 300 | 300 | 300 | 300 | 300 |
| tc [hr] | 3 | 3 | 3 | 3 | 3 |
| VN [ml/g] | 104 | 77,5 | 111,5 | 5,1 | 10,2 |
| Mn [g/mol] | 19.000 | 25.220 | 22.890 | 2.455 | 4.837 |
| Mw [g/mol] | 104.000 | 92.200 | 166.900 | 4.925 | 9.980 |
| Mw/Mn | 5,5 | 3,7 | 7,3 | 2,0 | 2,0 |

Die Rührgeschwindigkeit von 20 Umdrehungen pro Minute entspricht wiederum einer Scherrate von 100 s⁻¹.

Aus den Ergebnissen geht hervor, dass für zu hohe und zu niedrige Füllgrade deutlich verringerte Molekulargewichte erhalten werden.

### Beispiel 3

Analoge Versuche wurden für die Umsetzung von DCDPS mit 4,4'-Biphenol durchgeführt. Die Ergebnisse sind in der nachstehenden Tabelle 3 zusammengefasst.

**Tabelle 3**

| Versuch Nr. | 12 | 13 | 14 | 15 | 16 | 17 | 18 | 19 |
|---|---|---|---|---|---|---|---|---|
| DCDPS (A) [g] | 140,46 | 139,72 | 141,18 | 140,46 | 140,46 | 140,46 | 140,46 | 140,46 |
| Biphenol (B) [g] | 89,29 | 89,71 | 88,89 | 89,29 | 89,29 | 89,29 | 89,29 | 89,29 |
| K2CO3 [g] | 70,25 | 70,58 | 69,93 | 70,25 | 70,25 | 70,25 | 70,25 | 70,25 |
| Molverhältnis A/B | 1,02 | 1,01 | 1,03 | 1,02 | 1,02 | 1,02 | 1,02 | 1,02 |
| Tr [°C] | 300 | 300 | 300 | 300 | 300 | 310 | 290 | 300/310 |
| tc [hr] | 3 | 3 | 3 | 2 | 4 | 3 | 3 | 0,5/2,5 |
| VN [ml/g] | 55,6 | 61,1 | 44,1 | 56,1 | 36,6 | 60,3 | 35,9 | 62,2 |
| Mn [g/mol] | 16.400 | 26.000 | 15.800 | 19.300 | 11.000 | 22.200 | 12.300 | 21.600 |
| Mw [g/mol] | 50.300 | 63.600 | 39.000 | 51.200 | 29.500 | 62.600 | 30.800 | 63.000 |
| Mw/Mn | 3,1 | 2,5 | 2,5 | 2,7 | 2,7 | 2,8 | 2,5 | 2,9 |

Die Durchführung und Aufarbeitung erfolgten wie bei den Versuchen der Tabelle 1. Die Rührergeschwindigkeit betrug 20 Umdrehungen pro Minute, die Scherrate 100 s⁻¹, der Füllgrad 0,22.

Es wurde zusätzlich beobachtet, dass mit verlängerter Reaktionszeit die Viskositätszahl fiel. Eine zu lange Verweilzeit scheint zu einer Zersetzung zu führen. Daher beträgt die Umsetzungszeit im Mischkneter vorzugsweise maximal drei Stunden.

### Beispiel 4

Um einen Vergleich zwischen dem Einsatz eines Mischkneters und eines Extruders zu ermöglichen, wurde ein Zweischneckenkneter (LIST TCP) mit einem freien Volumen von 3,2 I und einem Rückflusssystem für die Monomere eingesetzt. Kaliumcarbonat wurde im Überschuss von 6 mol.-% eingesetzt. Die Rührergeschwindigkeit betrug 20 Umdrehungen pro Minute, der Füllgrad betrug 0,22, die Scherrate 30 s⁻¹. Für den Vergleichsversuch wurde ein Laborextruder für die Polykondensation verwendet. Da der Extruder keine Reaktionszeiten von mehr als 30 Minuten erlaubt, wurde in diesem Versuch die Umsetzungszeit gleichmäßig auf 30 Minuten festgelegt. Die Ergebnisse sind in der nachstehenden Tabelle 4 zusammengefasst.

**Tabelle 4**

| Versuchs Nr. | 20 | V20 |
|---|---|---|
| DCDPS (A) [g] | 127,41 | 127,41 |
| DHDPS (B) [g] | 108,87 | 108,87 |
| Molverhältnis A/B | 1,02 | 1,02 |
| Tr [°C] | 300 | 300 |
| tc [hr] | 0,5 | 0,5 |
| VN [ml/g] | 15,1 | 5,6 |
| Mn [g/mol] | 7.350 | 2.500 |
| Mw [g/mol] | 14.800 | 5.600 |
| Mw/Mn | 2,0 | 2,2 |

Wie aus den Ergebnissen hervorgeht, führt der Einsatz des Mischkneters zu einem wesentlich höheren Molekulargewicht. Das so erhaltene Produkt weist auch eine deutlich hellere Eigenfarbe auf, während das Produkt aus dem Extruder braun gefärbt war. Hierdurch wird deutlich, dass der erfindungsgemäße Einsatz eines Mischkneters vorteilhaft ist.

### Beispiel 5

Die Monomere DCDPS, DHDPS und K₂CO₃ werden in der in Fig. 1 schematisch dargestellten Apparatur in den in Tabelle 5 angegebenen molaren Zusammensetzungen vorgemischt und in dem Vorlagenbehälter (solid feed) der gravimetrischen Dosierschnecke (gravimetric feeder) vorgelegt. Mittels gravimetrischer Dosierung werden die Einsatzstoffe gemäß des eingestellten Durchsatzes kontinuierlich in die Stopfschnecke (feeder screw) gefördert und gelangen von dort in den Kneter (kneader). Die Stopfschnecke ist gekühlt, damit die Einsatzstoffe noch in fester Form vorliegen. Im Kneter werden die Einsatzstoffe DCDPS und DHDPS aufgeschmolzen und beginnen mit der Pottasche abzureagieren. Dabei bildet sich das Polymer sowie die Nebenprodukte H₂O, CO₂ sowie KCl. Die gasförmigen Komponenten H₂O und CO₂ werden entgast (off gases) und verlassen den Reaktionsraum über die Abgasleitung. Ein Teil des Monomers DCDPS sublimiert in die Gasphase und wird mit ausgetragen und wird von einem Rückflusskondensator (condenser) auskondensiert (condensate) und gelangt zurück in den Prozessraum.

Die Einsatzstoffe werden durch den rotierenden Mischkneter (kneader) gemischt und polymerisieren aus, während sie in axialer Richtung durch den Kneter transportiert werden. Am Auslass des Kneters befindet sich eine Austragsschnecke (discharge screw), die die vorliegende Polymerschmelze (Product), die noch KCl enthält, aus dem Mischkneter austrägt. Optional kann die hinter die Austragsschnecke eine Schmelzenpumpe geschaltet werden, mit der die ausgetragene Menge dosiert werden kann, und eine Strang- oder Unterwassergranulierung angeschlossen werden kann.

Die Drehzahlen (in min⁻¹) entsprechen den folgenden Scherraten (in s⁻¹)

| | |
|---|---|
| 5 | -7,4 |
| 15 | -22,2 |
| 30 | -44,2 |
| 50 | -74 |

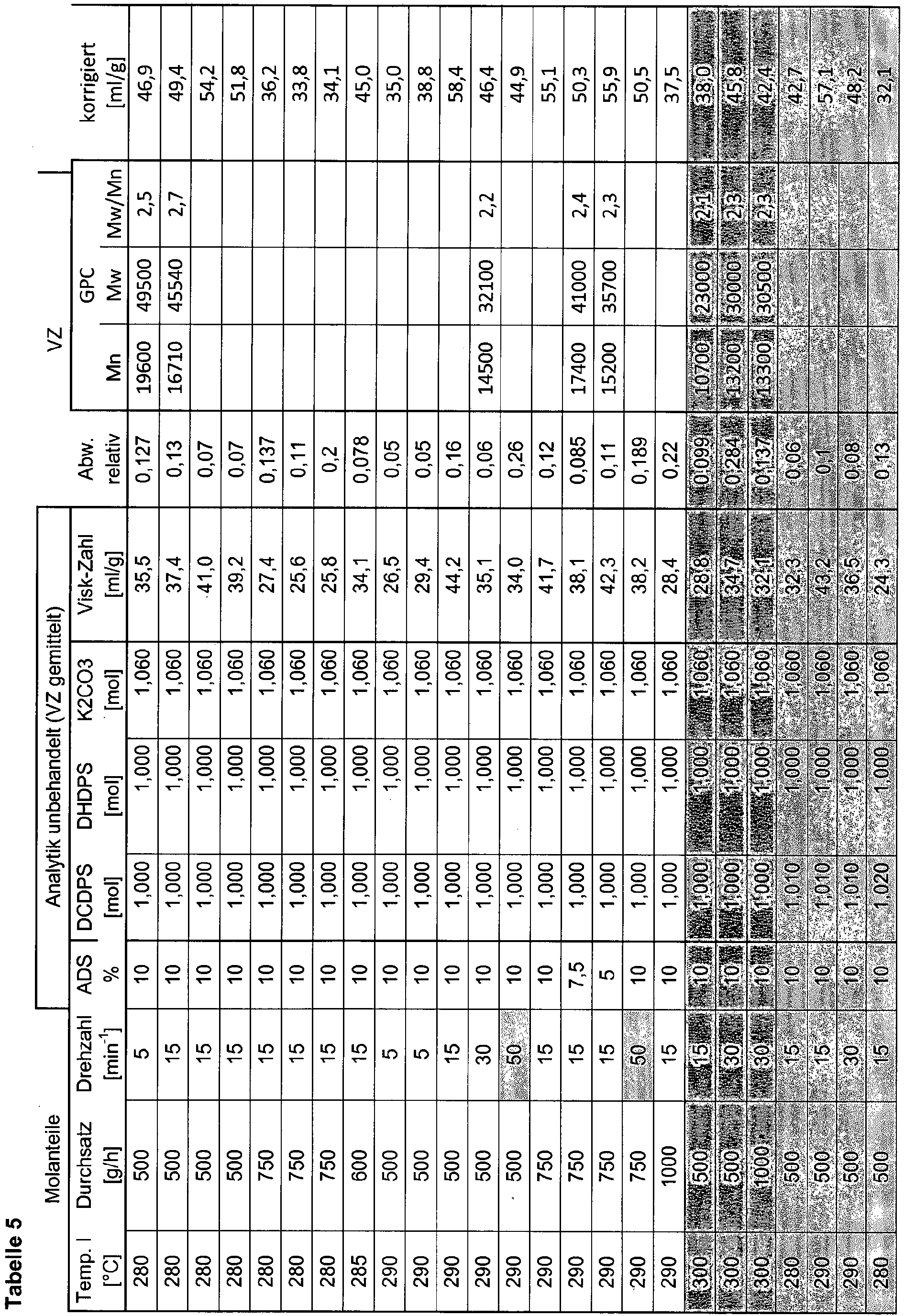

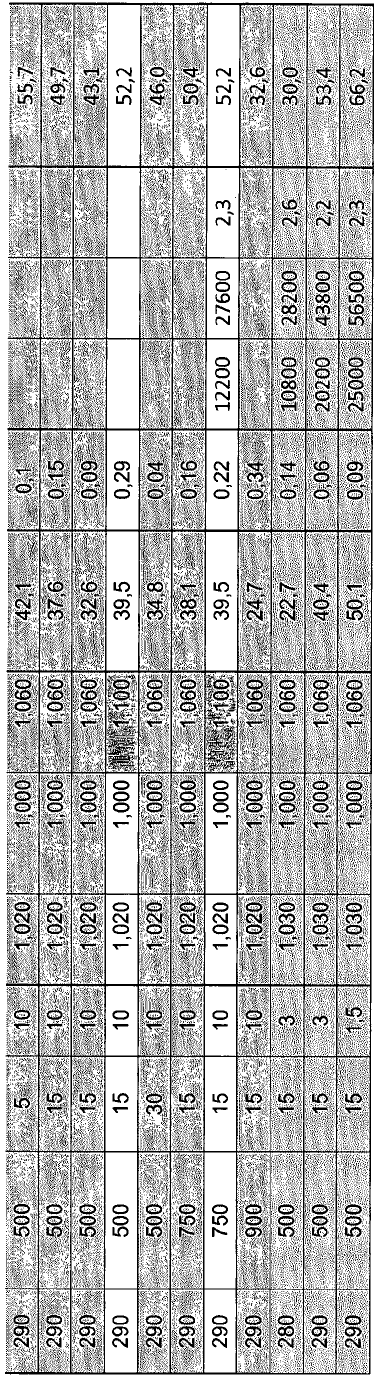

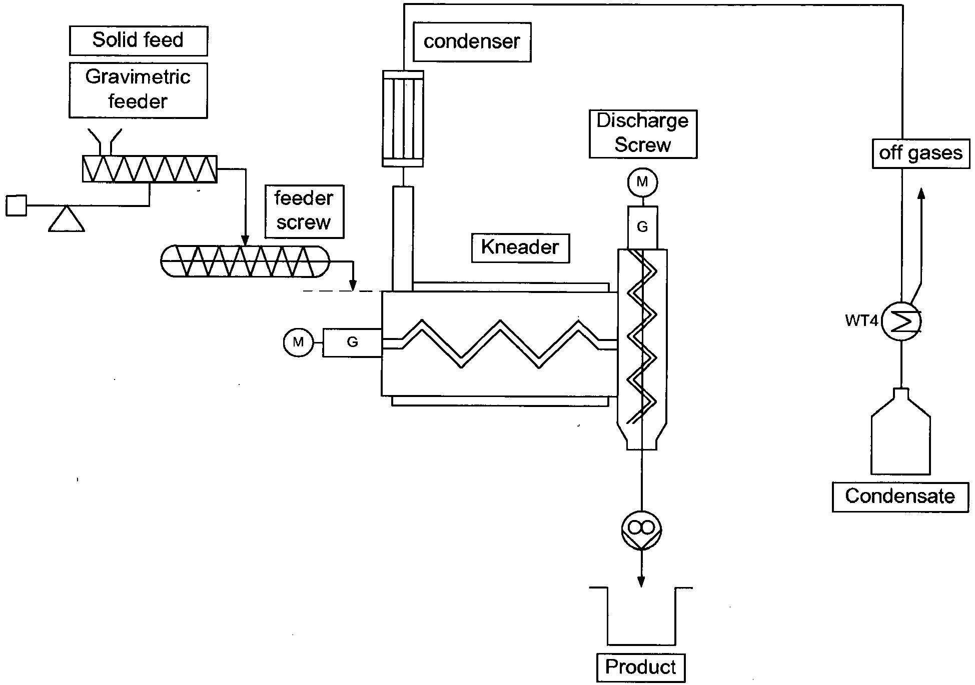

## Patentansprüche

1. Verfahren zur Herstellung von aromatischen Polyethersulfonen durch Umsetzung einer Dichlordiphenylsulfon-Komponente mit einer Bisphenol-Komponente als Monomeren in Gegenwart von Alkalicarbonat in der Schmelze in Abwesenheit von Lösungs- oder Verdünnungsmitteln, **dadurch gekennzeichnet, dass** die Umsetzung in einem Mischkneter durchgeführt wird, der mit einer Scherrate im Bereich von 5 bis 500 s⁻¹ betrieben wird, wobei der Füllgrad des Mischkneters im Bereich von 0,2 bis 0,8 liegt.

2. Verfahren nach Anspruch 1, **dadurch gekennzeichnet, dass** die Scherrate des Mischkneters im Bereich von 10 bis 250 s⁻¹ liegt.

3. Verfahren nach Anspruch 1 oder 2, **dadurch gekennzeichnet, dass** der Mischkneter einen Rotor aufweist, der mit einer Drehzahl im Bereich von 5 bis 50 Umdrehungen pro Minute betrieben wird.

4. Verfahren nach einem der Ansprüche 1 bis 3, **dadurch gekennzeichnet, dass** das Alkalicarbonat wasserfrei ist.

5. Verfahren nach einem der Ansprüche 1 bis 4, **dadurch gekennzeichnet, dass** der Mischkneter mit einem Rückflusskondensator zur Kondensation verdampfender Monomere ausgerüstet ist und die kondensierten Monomere in den Mischkneter zurückgeführt werden.

6. Verfahren nach einem der Ansprüche 1 bis 5, **dadurch gekennzeichnet, dass** es bei einer Temperatur im Bereich von 250 bis 350 °C durchgeführt wird.

7. Verfahren nach einem der Ansprüche 1 bis 6, **dadurch gekennzeichnet, dass** es kontinuierlich durchgeführt wird.

8. Verfahren nach einem der Ansprüche 1 bis 7, **dadurch gekennzeichnet, dass** das Alkalicarbonat mit mindestens einem der Monomere vorgemischt eingesetzt wird.

9. Verfahren nach einem der Ansprüche 1 bis 8, **dadurch gekennzeichnet, dass** die aromatischen Polyethersulfone mindestens eine der folgenden Struktureinheiten aufweisen:

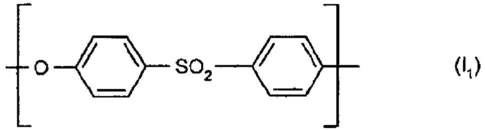

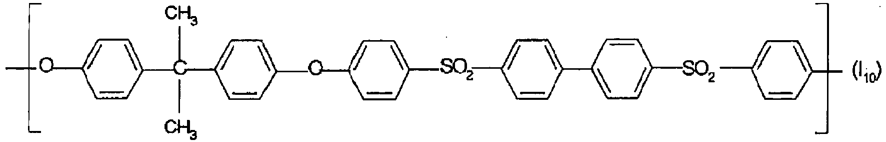

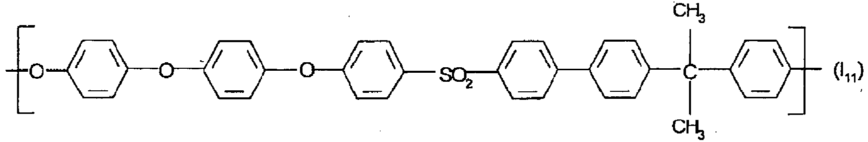

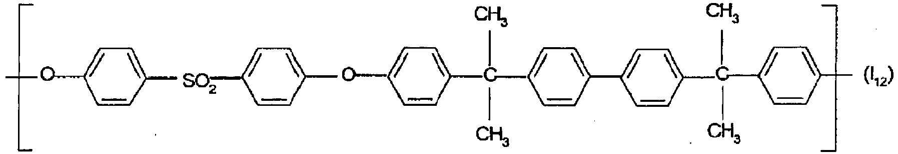

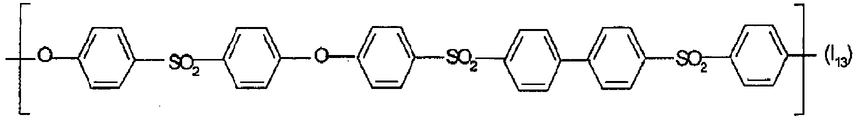

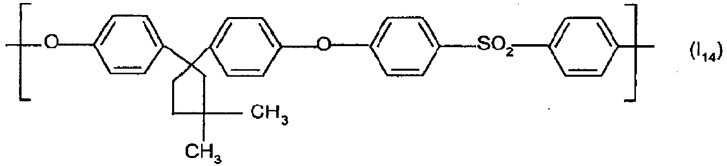

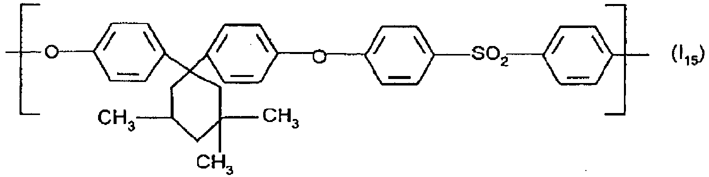

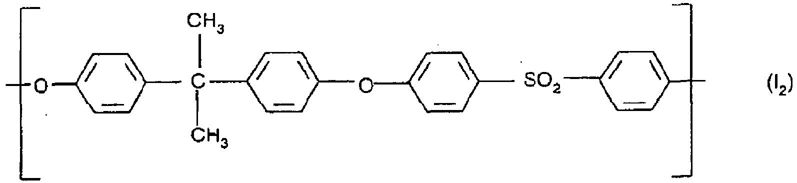

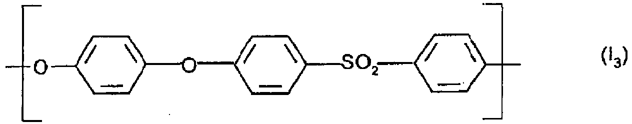

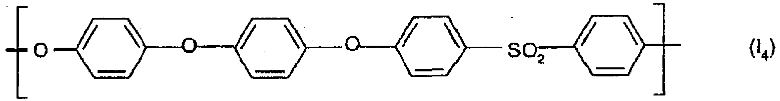

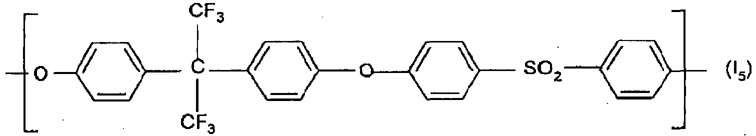

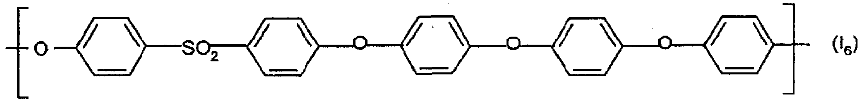

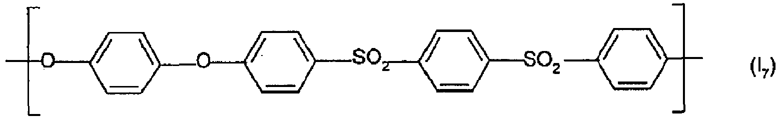

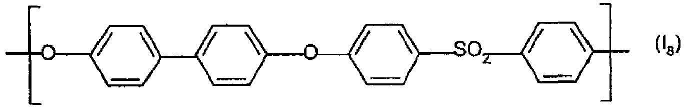

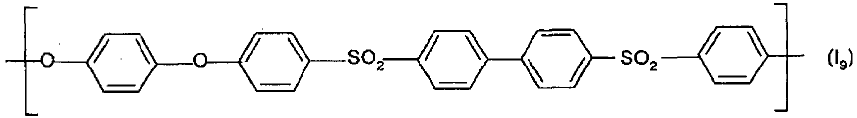

## Claims

1. A process for producing aromatic polyether sulfones via reaction of a dichlorodiphenyl sulfone component with a bisphenol component as monomers in the presence of alkali metal carbonate in the melt in the absence of solvents and diluents, which comprises carrying out the reaction in a mixing kneader which is operated with a shear rate in the range from 5 to 500 s⁻¹, wherein the fill level of the mixing kneader is in the range from 0.2 to 0.8.

2. The process according to claim 1, wherein the shear rate of the mixing kneader is in the range from 10 to 250 s⁻¹.

3. The process according to claim 1 or 2, wherein the mixing kneader has a rotor which is operated at a rotation rate in the range from 5 to 50 revolutions per minute.

4. The process according to any of claims 1 to 3, wherein the alkali metal carbonate is anhydrous.

5. The process according to any of claims 1 to 4, wherein the mixing kneader has a reflux condenser for condensing vaporizing monomers and the condensed monomers are returned to the mixing kneader.

6. The process according to any of claims 1 to 5, which is carried out at a temperature in the range from 250 to 350°C.

7. The process according to any of claims 1 to 6, which is carried out continuously.

8. The process according to any of claims 1 to 7, wherein the alkali metal carbonate is used in the form of a premixture with at least one of the monomers.

9. The process according to any of claims 1 to 8, wherein the aromatic polyether sulfones have at least one of the following structural units:

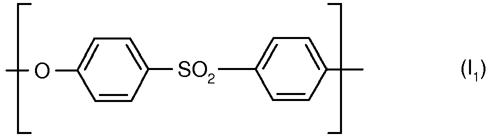

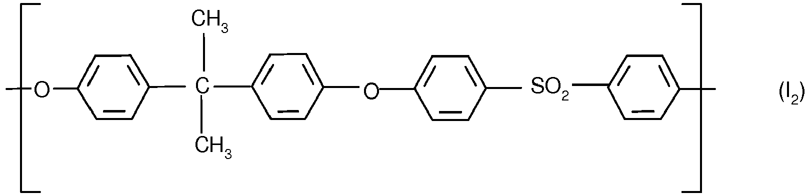

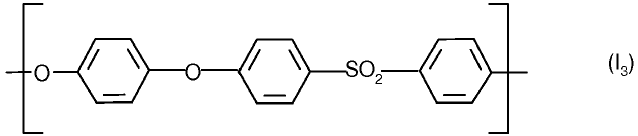

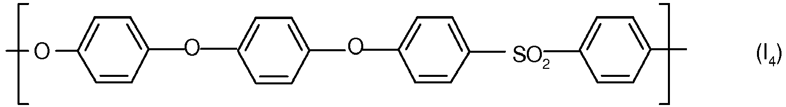

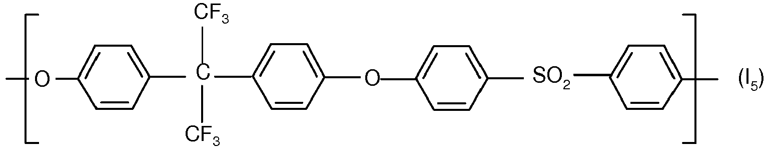

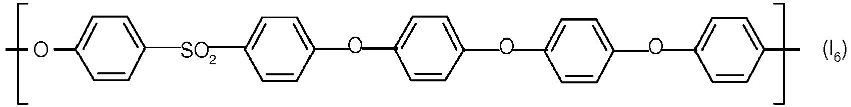

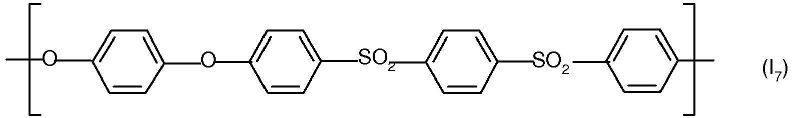

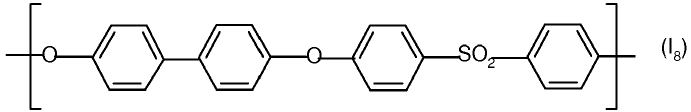

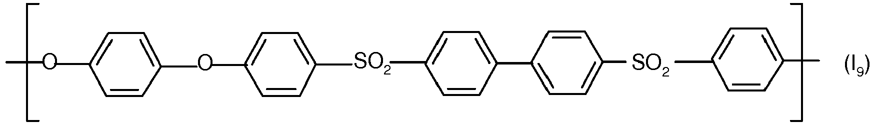

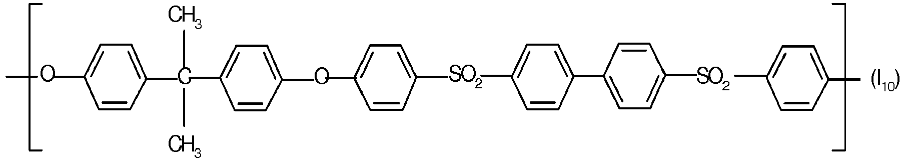

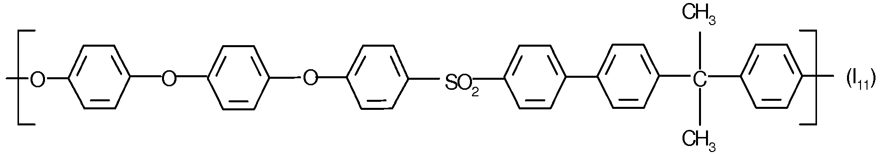

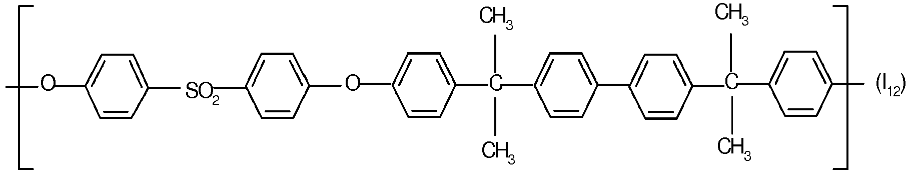

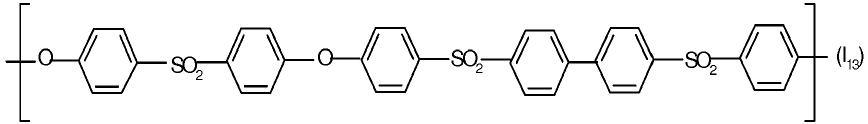

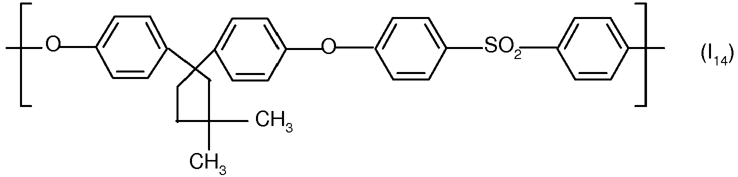

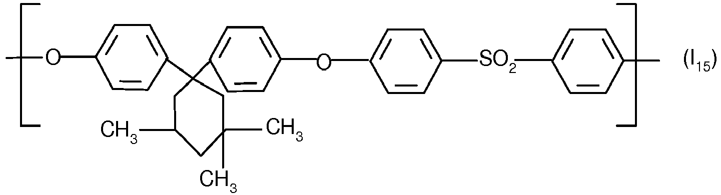

## Revendications

1. Procédé de fabrication de polyéthersulfones aromatiques par mise en réaction d'un composant dichlorodiphénylsulfone avec un composant bisphénol en tant que monomères en présence d'un carbonate alcalin dans la masse fondue, en l'absence de solvants ou de diluants, **caractérisé en ce que** la réaction est réalisée dans un malaxeur de mélange qui est exploité avec un taux de cisaillement dans la plage allant de 5 à 500 s⁻¹, le degré de remplissage du malaxeur de mélange se situant dans la plage allant de 0,2 à 0,8.

2. Procédé selon la revendication 1, **caractérisé en ce que** le taux de cisaillement du malaxeur de mélange se situe dans la plage allant de 10 à 250 s⁻¹.

3. Procédé selon la revendication 1 ou 2, **caractérisé en ce que** le malaxeur de mélange comprend un rotor qui est exploité à une vitesse de rotation dans la plage allant de 5 à 50 tours par minute.

4. Procédé selon l'une quelconque des revendications 1 à 3, **caractérisé en ce que** le carbonate alcalin est anhydre.

5. Procédé selon l'une quelconque des revendications 1 à 4, **caractérisé en ce que** le malaxeur de mélange est équipé d'un condensateur à reflux pour la condensation des monomères évaporés et les monomères condensés sont recyclés dans le malaxeur de mélange.

6. Procédé selon l'une quelconque des revendications 1 à 5, **caractérisé en ce qu'**il est réalisé à une température dans la plage allant de 250 à 350 °C.

7. Procédé selon l'une quelconque des revendications 1 à 6, **caractérisé en ce qu'**il est réalisé en continu.

8. Procédé selon l'une quelconque des revendications 1 à 7, **caractérisé en ce que** le carbonate alcalin est utilisé pré-mélangé avec au moins un des monomères.

9. Procédé selon l'une quelconque des revendications 1 à 8, **caractérisé en ce que** les polyéthersulfones aromatiques comprennent au moins une des unités structurales suivantes .
